# EUROPÄISCHE PATENTSCHRIFT

(11) **EP 4 028 287 B1**
(45) Veröffentlichungstag und Bekanntmachung des Hinweises auf die Patenterteilung: **11.03.2026**
(21) Anmeldenummer: 20768331.9
(22) Anmeldetag: 07.09.2020
(51) Int. Cl.: B60Q 3/44, B60Q 3/233, B60Q 3/267, B60N 3/00, B60N 3/02, B60N 2/24

(54) **LESE- UND TISCHBELEUCHTUNG FÜR FAHRZEUGEN, DIE PASSAGIERE BEFÖRDERN**
READING LAMP AND TABLE ILLUMINATION FOR VEHICLES THAT TRANSPORT PASSENGERS
ÉCLAIRAGE DE LECTURE ET DE TABLETTE POUR VEHICULES TRANSPORTANT DES PASSAGERS

(30) Priorität: 12.09.2019 TR 201913886
(43) Veröffentlichungstag der Anmeldung: 20.07.2022
(73) Patentinhaber: Daimler Truck AG, 70771 Leinfelden-Echterdingen (DE)
(72) Erfinder: BASARGAN, Refik, Can, 34500 Istanbul (TR); SAGLAM, Umit, 34510 Istanbul (TR)
(74) Vertreter: JENSEN & SON
(86) Internationale Anmeldenummer: PCT/EP2020/074924
(87) Internationale Veröffentlichungsnummer: WO 2021/048045

(56) Entgegenhaltungen:
- EP-A1- 2 578 442
- CN-A- 108 839 804
- DE-A1- 102008 003 148
- DE-U1- 202006 004 307
- FR-A1- 2 987 797
- JP-A- 2017 007 503
- JP-A- H08 230 540
- US-A1- 2007 035 955
- US-A1- 2007 076 415

## Beschreibung

### Technisches Gebiet

Die vorliegende Erfindung betrifft Lese- und Tischbeleuchtungsystemen in Bussen. Die Erfindung betrifft besonders eine Lese- und Tischbeleuchtungslampe in den Bussen, die gewährleistet, die Tische an den Rückenlehnen der Passagiersitzen durch die LED-Leuchten, die an den Griffen an den Rückenlehnen der Passagiersitzen in Bussen integriert sind, zu beleuchten und gleichzeitig als Leselampe zu benutzen.

### Beschreibung des Standes der Technik

Obwohl die Leselampen an der Decke der Busse für jeden Sitz separat betrachtet werden, beleuchten sie im Gebrauch nicht nur die nutzende Person, sondern auch die Umgebung.

Diese Situation verursacht zu Unbehagen für die Passagiere, die auf den Sitzen um das Licht sitzen.

Da die Beleuchtung von der Decke aus erfolgt, wirkt sich das von der Windschutzscheibe reflektierte Licht auf den Fahrer aus, insbesondere während den Nachtfahrten, und der Fahrkomfort und die Sicherheit werden negativ beeinflusst.

Da dabei die Lichtintensität nicht eingestellt werden kann, werden die Augen der Passagiere durch Reflexion gestört.

Durch die Beleuchtung von der Decke werden der Fahrkomfort und die Sicherheit durch die Reflexion an der Windschutzscheibe während den Nachtfahrten negativ beeinflusst.

Gleichzeitig wirkt das von den Seitenfenstern reflektierte Licht den Komfort anderer Passagiere aus.

Neue technische Lösungen sind erforderlich, um diese Situation zu beseitigen.

Bei der Beleuchtung von der Decke kann die Lichtintensität nicht eingestellt werden, und der Passagier, der die Leselampe verwendet, und die Passagiere um ihn herum können aufgrund des Lichts nicht bequem reisen.

In gegenwärtigen Systemen stellt der Zugang zur Steuerung der Deckenleselampen insbesondere für behinderte Passagiere und für kleine Passagiere wie Kinder ein Problem dar.

In bestehenden Systemen müssen aufgrund der Installation am Luftkanal je nach Sitzverteilung in unterschiedlichen Abständen unterschiedliche Anwendungen innerhalb der Decke erfolgen. Es besteht ein Bedarf an den neuen technischen Entwicklungen, bei denen die Montage und die Vorbereitung der Montage erleichtert wird und die Ausfall- und Austauschprozesse einfach realisiert werden können.

Die Chinesische Patentanmeldung CN104315402 beschreibt eine multifunktionalen Tischlampe. Die multifunktionale Tischlampe weist einen unteren Sitz, eine Lampenpfahl und einen am unteren Sitz befestigten Tischlampe-Körper. Eine technisch verschiedene Struktur ist für die Verwendung auf dem Tisch zu Hause beschrieben.

JP H08 230 540 A beschreibt das Einstellen einer Leuchtposition eines Griffs unter Arbeitsbedingungen und das Aufbewahren unter Nicht-Arbeitsbedingungen.

Die US 2007 076 415 A1 beschreibt eine Leuchteinrichtung.

JP 2017 007 503 A beschreibt die Bereitstellung eines Hilfsgriffs, mit dem der Innenraum eines Kraftfahrzeugs beleuchtet und die Beleuchtungsrichtung geändert werden kann.

US 2007 035 955 A1 offenbart ein Licht für einen Passagiersitz.

CN 108 839 804 A offenbart einen multifunktionalen Flugzeugsitz.

DE 20 2006 004307 U1 offenbart eine Sitzvorrichtung.

DE 10 2008 003 148 A1 beschreibt ein Gelenk für eine Leseleuchte.

FR 2 987 797 A1 eine Ablage für eine Beleuchtungseinrichtung zur Beleuchtung des Fahrgastraumes eines Fahrzeuges, z.B. eines Kraftfahrzeuges, mit einer Reproduktionseinrichtung zur Reproduktion von Energie vom Lichteintrittsbereich zum Lichtaustrittsbereich in Form von Lichtstrahlen.

EP 2 578 442 A1 beschreibt einen Sitz für Passagiertransportfahrzeuge und Fahrzeuge mit einem solchen Sitz.

### Beschreibung der Aufgabe der Erfindung

Die Aufgabe der Erfindung ist ausgehend von dem bekannten Stand der Technik eine Tischbeleuchtung- und Leselampe zu entwickeln, bei der die Nachteile in bestehenden Strukturen beseitigt werden und die durch die integrierten LED Lampen an den Griffen an den Rückenlehnen der Passagiersitzen in Bussen ausgebildet sind

Eine weitere Aufgabe der Erfindung ist es, die Reflexion von den Vorder- und Seitenfenstern zu entfernen, indem die Lese- / Beleuchtungslampe auf die Griffe an der Rückenlehne gebracht wird.

Eine weitere Aufgabe der Erfindung besteht darin, eine Leselampe zu erzeugen, deren Lichtintensität eingestellt werden kann.

Eine weitere Aufgabe der Erfindung ist es, eine Beleuchtung im Rückenlehnengriff zu erzeugen, die leicht zugänglich und steuerbar ist.

Eine weitere Aufgabe der Erfindung besteht darin, durch die Montage direkt an der Rückenlehne die mögliche Wartung und den Austausch zu erleichtern.

Um die genannten Aufgaben zu erreichen, hat man Tischleuchten und Leselampen in Bussen entwickelt.

### Beschreibung der Figuren

- Figur - 1;: zeigte eine allgemeine Ansicht einer repräsentativen Anwendung der Erfindung auf der Rückenlehne.
- Figur-2;: zeigt eine Detailansicht des Griffs in einer repräsentativen Anwendung der Erfindung.
- Figur-3;: zeigt die Verwendung auf den Sitzen in einer repräsentativen Anwendung der Erfindung.

### Detaillierte Beschreibung der Erfindung

Die Aufgabe der Erfindung wird durch ein Lese- und Tischbeleuchtungssystem mit den Merkmalen des Anspruchs 1 gelöst. In erfindungsgemäßen Bussen besteht das Leselampensystem aus den LED-Lampen als Lese- / Beleuchtungslampe (3), die sich an den in die Rückenlehnen (1) integrierten Griffen (2) befinden. Die Lese- / Beleuchtungslampe (3) wird durch eine Taste (5) gesteuert, die sich auf dem Griff (2) befindet. Die für den Betrieb des Systems erforderliche Energie wird durch die Seitenwände oder durch die Sitzverbindungsschiene auf die Sitzrahmen und von den Sitzrahmen in die 10 Rückenlehnen (1) und in die Griffe (2) übertragen.

Während der Montage der Griffe (2) wird es in das Elektrokabel eingesteckt. Durch einen Druck auf die Taste (5) am Griff (2) wird die als Lese- / Beleuchtungslampe (3) dienende LED-Lampe mit geringer Beleuchtungsstärke aktiviert und der Lese- / Beleuchtungsbereich (4) beleuchtet.

Durch ein zweites Drücken auf die Taste (5) erhöht sich die Lichtintensität und es wird eine stärkere Beleuchtung bereitgestellt. Durch ein drittes Drücken der Taste (5) wird die Lese- / Beleuchtungslampe (3) geschlossen.

Bei Verwendung des Tisches (6) an der Rückenlehne (1) ist der Lese- / Beleuchtungsbereich (4) so fokussiert, dass er die Oberfläche des Tisches (6) beleuchten wird und bei Nichtverwendung des Tisches (6) wird er so fokussiert, dass er den Lesebereich beleuchten wird

Das gesamte System weist eine Ein-Aus-Steuerung mit einem Schalter im Fahrerbereich auf, so dass es bei Bedarf vollständig deaktiviert werden kann.

Die Anwendung des Systems kann nicht nur in Bussen, sondern auch in allen Fahrzeugen wie Zügen, Straßenbahnen usw., in denen Passagiere befördert werden, sichergestellt werden. Das System kann sowohl in die mittleren Griffe als auch in die an den Rückenlehnen (1) montierten Seitengriffe (2) integriert werden und es kann auch an die Griffe an der Korridor- oder Seitenwandseite integriert werden.

Die Einstellung der Lichtfarbe des Systems und/oder die Änderung der Lichtfarbe angepasst zur Steuerung der Lichtintensität durch mehrere Stufen kann mittels eines Steuergeräts (7) sichergestellt werden.

Erfindungsgemäße Tisch-Beleuchtungssysteme in Fahrzeugen, in Bussen ist dadurch gekennzeichnet, dass sie die Lese- / Beleuchtungslampen (3) zum Lesen und Beleuchten in den in die Rückenlehnen (1) integrierten Lese- / Beleuchtungsbereichen (4) umfassen, um ein Lese-/Beleuchtungssystem zu erstellen, bei der bei Verwendung des Tisches (6) an der Rückenlehne (1) der Lese-/ Beleuchtungsbereich so zu fokussiert wird, dass er die Oberfläche des Tisches (6) beleuchtet und bei Nichtverwendung des Tisches (6) er so zu fokussiert wird, dass er den Lesebereich beleuchtet.

Die Lese- / Beleuchtungslampe (3) an den in die Rückenlehnen (1) integrierten Griffen (2) enthält je eine LED-Lampe.

Es umfasst mindestens eine Taste (5), die während des Zusammenbaus der Griffe (2) an das Stromkabel angeschlossen wird, die durch einen einzigen Druck die als Lese-/Beleuchtungslampe (3) dienende LED-Lampe mit geringer Beleuchtungsstärke aktivieren wird, die die Beleuchtung des Lese- / Beleuchtungsbereiches (4) sorgt, die die Lichtintensität mit einem zweiten Druck erhöht und für eine stärkere Beleuchtung sorgt.

Es enthält ein Steuergerät (7), das das Ein- und Ausschalten mit einem Schlüssel im Fahrerbereich steuert, sodass es bei Bedarf vollständig deaktiviert werden kann.

Es umfasst Lese- / Beleuchtungslampen (3), die neben den Seitengriffen (2), die an den Rückenlehnen (1) in Fahrzeugen wie Bussen, Zügen, Straßenbahnen, die Passagiere befördern, integriert sind, auch in die mittleren Griffe sowie in die Griffen (2) in der Korridor- und Seitenwänden integriert werden.

Es umfasst ein Steuergerät (7), mittels dessen die Einstellung der Lichtfarbe des Systems und/oder die Anderung der Lichtfarbe angepasst zur Steuerung der Lichtintensität durch mehrere Stufen sichergestellt wird.

### Referenznummerliste

| | |
|---|---|
| 1 Sitzlehne | 5 Taste |
| 2 Griff | 6 Tisch |
| 3 Lese- / Beleuchtungslampe | 7 Steuergerät |
| 4 Lese- / Beleuchtungsbereich | |

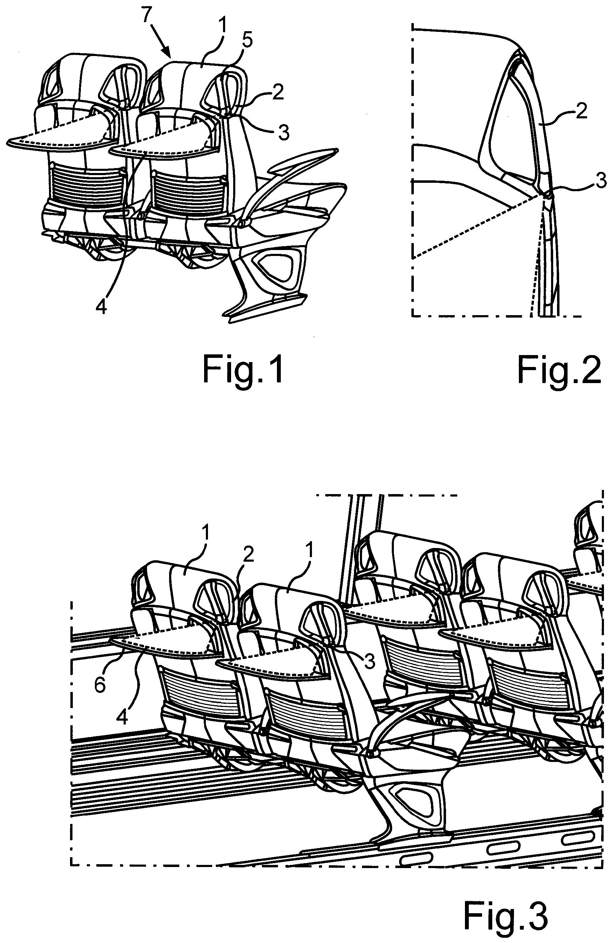

## Patentansprüche

1. Lese- und Tischbeleuchtungssystem für Fahrzeuge, die Passagiere befördern, wie Busse, Züge oder Straßenbahnen, wobei das System eine Lese- / Beleuchtüngslampe (3) aufweist, die ausgebildet ist, in einer einen Tisch (6) aufweisenden Rückenlehne (1) integriert zu werden, wobei bei einer Verwendung des Tisches (6) die Lese- /-Beleuchtungslampe (3) eine Oberfläche des Tisches (6) beleuchtet und bei Nichtverwendung des Tisches (6) die Lese- / Beleuchtungslampe (3) einen Lesebereich beleuchtet, **dadurch gekennzeichnet, dass**
das System ein Steuergerät (7) umfasst, das das Ein- und Ausschalten mit einem Schlüssel im Fahrerbereich steuert, sodass es bei Bedarf vollständig deaktiviert werden kann, und dass mittels des Steuergeräts (7) die Einstellung der Lichtfarbe des Systems und/oder die Änderung der Lichtfarbe angepasst zur Steuerung der Lichtintensität durch mehrere Stufen sichergestellt wird.

2. Lese- und Tischbeleuchtungssystem nach Anspruch 1 **dadurch gekennzeichnet, dass** die Lese- / Beleuchtungslampe (3) eine LED-Lampe umfasst, die sich an einem in die Rückenlehne (1) integrierten Griff (2) befinden kann.

3. Lese- und Tischbeleuchtungssystem nach Anspruch 2 + **dadurch gekennzeichnet, dass** das System eemindestens eine Taste (5) umfasst, die während des Zusammenbaus des Griffes (2) an ein Stromkabel angeschlossen wird, wobei durch einen einzigen Druck auf die Taste (5) die als Lese-/Beleuchtungslampe (3) dienende LED-Lampe mit geringer Beleuchtungsstärke aktiviert wird, und wobei die Taste (5) die Lichtintensität mit einem zweiten Druck erhöht und für eine stärkere Beleuchtung sorgt.

4. Lese- und Tischbeleuchtungssystem nach Anspruch 1 **dadurch gekennzeichnet, dass** die Lese-/Beleuchtungslampe (3) neben einem Seitengriff (2), der an der Rückenlehne (1) integriert ist, auch in einen mittleren Griff sowie in einem Griff (2) an einer Korridor- und Seitenwand integriert werden kann

## Claims

1. A reading and table lighting system for passenger-carrying vehicles such as busses, trains and trams,
the system comprising
a reading/lighting lamp (3) that is configured to be integrated in a backrest (1) that comprises a table (6),
the reading/lighting lamp (3) illuminating a surface of a table (6) when the table (6) is in use, and the reading/lighting lamp (3) illuminating a reading area when the table (6) is not in use, **characterised in that**
the system comprises a control device (7) that controls the switching-on and switching-off function by means of a key in the driver's area such that the function can be fully deactivated if required, and **in that**
the light colour of the system can be set and/or modified in a plurality of stages in line with the control of the light intensity by means of the control device (7).

2. A reading and table lighting system according to claim 1, **characterised in that**
the reading/lighting lamp (3) comprises an LED bulb that may be located in a grab handle (2) that is integrated in the backrest (1).

3. A reading and table lighting system according to claim 2, **characterised in that**
the system comprises at least one button (5) that is connected to a power cable during the assembly of the grab handle (2), the low-intensity LED bulb serving as the reading/lighting lamp (3) being activated by a single press of the button (5), and
a second press of the button (5) increasing the light intensity and providing stronger lighting.

4. A reading and table lighting system according to claim 1, **characterised in that**
the reading and lighting lamp (3) may be integrated not only in a lateral grab handle (2) integrated in the backrest (1), but also in a central grab handle or in a grab handle (2) in an aisle or side wall.

## Revendications

1. Système d'éclairage de lecture et de tablette pour des véhicules qui transportent des passagers tel que des bus, des trains ou des tramways,
dans lequel le système comprend une lampe d'éclairage/de lecture (3) qui est conçue pour être intégrée dans un dossier (1) comportant une tablette (6),
dans lequel lorsque la tablette (6) est utilisée, la lampe d'éclairage/de lecture (3) éclaire la surface de la tablette (5) et lorsque la tablette (6) n'est pas utilisée, la lampe d'éclairage/de lecture (3) éclairage une zone de lecture, **caractérisé en ce que** le système comprend un dispositif de commande (7) qui commande la mise en marche et l'arrêt à l'aide d'une clé dans l'espace conducteur, de sorte qu'il peut être complètement désactivé si nécessaire et **en ce qu'**au moyen du dispositif de commande (7) le réglage de la couleur de la lumière du système et/ou la modification de la couleur de la lumière peut être adapté(e) afin de garantir le réglage de l'intensité de la lumière selon plusieurs niveaux.

2. Système d'éclairage de lecture et de tablette selon la revendication 1,
**caractérisé en ce que** la lampe d'éclairage/de lecture (3) comprend une lampe DEL qui peut se trouver sur une poignée (2) intégrée au dossier (1).

3. Système d'éclairage de lecture et de tablette, **caractérisé en ce que** le système comprend au moins un bouton (5) qui pendant l'assemblage de la poignée (2) est raccordé à un câble d'alimentation, dans lequel d'une simple pression sur le bouton (5), la lampe DEL servant de lampe de lecture/d'éclairage (3) est activée à une faible intensité lumineuse, d'une seconde pression assure un éclairage plus intense.

4. Système d'éclairage de lecture et de tablette, **caractérisé en ce que** la lampe d'éclairage/de lecture (3) qui est intégrée au dossier (1) peut également être intégrée dans une poignée centrale ainsi que dans une poignée (2) d'une paroi latérale et de couloir.
